# FASCICULE DE BREVET EUROPEEN

(11) **EP 0 462 855 B1**
(45) Date de publication et mention de la délivrance du brevet: **20.04.1994**
(21) Numéro de dépôt: 91401368.5
(22) Date de dépôt: 28.05.1991
(51) Int. Cl.: B62D 1/16

(54) **Dispositif de retenue d'un arbre logé dans un fourreau et son application aux directions d'automobile**
Haltevorrichtung für eine Welle im Inneren einer Hülse und Anwendung derselben in Kraftfahrzeug-Lenkungen
Retaining device for a shaft located inside a sleeve and its use in automotive steering systems

(30) Priorité: 19.06.1990 FR 9007669
(43) Date de publication de la demande: 27.12.1991
(73) Titulaire: NACAM, F-41100 Vendôme (FR)
(72) Inventeur: Foulquier, Jacques, F-41100 Vendôme (FR); Baudon, Sylvie, F-41100 Vendôme (FR)
(74) Mandataire: Phélip, Bruno

(56) Documents cités:
- DE-A- 3 623 560
- GB-A- 2 163 207
- US-A- 4 504 164
- PATENT ABSTRACTS OF JAPAN vol. 6, no. 50 (M-120)(928), 3 avril 1982; & JP - A - 56163962 (TOYO KOGYO) 16.12.1981

## Description

L'invention concerne l'immobilisation temporaire d'un arbre logé au moins partiellement dans un fourreau qui sont relativement mobiles en translation et en rotation selon un axe commun longitudinal, et concerne plus particulièrement le cas des colonnes de direction d'automobiles.

L'invention a plus spécialement pour objets un dispositif de retenue d'un arbre logé au moins partiellement dans un fourreau qui sont relativement mobiles en translation et en rotation selon un axe commun et l'application d'un tel dispositif aux colonnes de direction, notamment d'automobiles.

Dans de nombreux secteurs d'activité, on utilise des arbres logés au moins partiellement dans un fourreau qui sont relativement mobiles en translation et en rotation et qu'il faut au moins momentanément immobiliser relativement l'un à l'autre en translation et éventuellement en rotation pour qu'ils ne puissent tourner que selon un arc déterminé au cours de leur mise en oeuvre et en particulier lors des processus de montage et d'assemblage, et cela avant qu'il soit ensuite totalement libérés.

Ce type de situation se rencontre par exemple dans l'industrie automobile au moment de l'installation d'une colonne de direction sur la structure ou coque d'un véhicule. En effet, au moment où l'on pose une telle colonne de direction, il faut raccorder l'extrémité de l'arbre de cette dernière qui est opposée à celle qui recevra le volant, à un boîtier de commande mécanique ou hydraulique qui relie cet arbre au mécanisme qui permet d'orienter le train de roues directrices en fonction de la rotation imprimée au volant par le conducteur.

Le plus souvent, une telle colonne de direction se présente sous la forme d'un sous-ensemble éventuellement équipé d'un volant, qui doit occuper une position relativement bien définie par rapport à la planche de bord qui est souvent déjà au moins partiellement pré-équipée. Au cours de ces opérations de montage, il ne faut pas que le volant et les parties de planche de bord sous-jacentes viennent intempestivement au contact car un tel contact risquerait soit de les détériorer, soit d'engendrer du bruit, soit même de rendre inopérantes des parties de systèmes de commande tels ceux assurant le rappel des indicateurs de changement de direction ou "clignotants" si par exemple le volant est par trop éloigné de la planche de bord. D'autre part, pour faciliter la réunion de l'extrémité de l'arbre au boîtier de commande dont il a été question précédemment, il est particulièrement judicieux que la position tant angulaire qu'axiale de cette extrémité d'arbre soit bien définie, au moins entre certaines limites, car le raccordement, le plus souvent, s'opère en aveugle dans un volume des plus restreint et d'accès très malaisé.

Le but de l'invention est de remédier à ce type d'inconvénients en particulier lors des assemblages sur les chaînes de montage de l'industrie automobile.

L'invention a pour objet un dispositif de retenue d'un arbre logé au moins partiellement dans un fourreau, l'arbre et le fourreau étant relativement mobiles en translation et en rotation selon un axe commun longitudinal. Un tel dispositif de l'art antérieur est décrit dans le document JP-A-56 163 962 (Abstract). Ce dispositif est remarquable en ce qu'il comprend une came qui est portée par l'arbre et qui est située à sa périphérie et qui est solidaire aussi bien en translation qu'en rotation de celui-ci, une contre-came avec un palpeur qui est destinée à coopérer avec cette came et qui est portée par le fourreau et qui est située au moins partiellement à l'intérieur du fourreau dans un plan fixe perpendiculaire à l'axe et qui est montée mobile dans ce plan pratiquement radialement, ces came et contre-came pésentant des profils propres mâle et femelle complémentaires destinés à s'engager l'un dans l'autre, un organe élastique qui agit sur cette contre-came et qui tend normalement à la séparer de la came, des moyens de maintien qui sont destinés a coopérer avec cet organe élastique pour le placer dans un premier état bandé d'équilibre métastable où came et contre-came sont au contact et leurs profils engagés au moins partiellement afin que arbre et fourreau, d'une part, soient immobilisés en translation et, d'autre part, soient mobiles en rotation selon un arc déterminé inférieur à 360°, et dans un deuxième état peu bandé d'équilibre relativement stable où came et contre-came sont séparées et leurs profils dégagés au moins partiellement afin que arbre et fourreau soient totalement libres en translation et en rotation, le passage du premier au deuxième état résultant d'un contact came contre-came à la suite d'une rotation supérieure à l'arc en question alors que l'organe élastique est dans son premier état.

L'invention a aussi pour objet l'application d'un tel dispositif aux colonnes de direction d'automobiles où cette rotation supérieure à l'arc déterminé est celle de l'arbre destiné à porter un volant.

D'autres caractéristiques de l'invention ressortiront de la lecture de la description et de revendications qui suivent ainsi que de l'examen du dessin annexé, donné seulement à titre d'exemple, où :
- la Figure 1 est une vue partielle schématique en élévation d'un arbre du dispositif selon l'invention;
- la Figure 2 est une coupe selon le plan P de la Figure 1;
- les Figures 3A et 3B sont des sections analogues à la coupe de la Figure 2 de deux autres variantes d'exécution;
- les Figures 4A, 4B et 4C sont des vues de dessus partielles schématiques de différentes variantes d'exécution d'un mode de réalisation des moyens de maintien du dispositif de retenue selon l'invention;
- les Figures 5A et 5B sont des coupes partielles schématiques selon la plan P d'un mode de réalisation du dispositif selon l'invention respectivement dans chacun de ses deux états différents;
- la Figure 6 est une vue schématique en coupe méridienne d'un autre mode de réalisation, et;
- la Figure 7 est une vue analogue à celle de la Figure 6 d'une variante d'exécution de ce mode de réalisation avec partiellement, deux modalités de construction.

Dans ce qui suit, on décrira un dispositif de retenue d'un arbre logé au moins partiellement dans un fourreau selon l'invention dans son application particulière à une direction d'automobile.

Les montages d'arbre dans un fourreau étant bien connus dans la technique et tout spécialement dans l'industrie automobile, on ne décrira que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue.

Pour la commodité de l'exposé, on décrira successivement les divers constituants d'un dispositif de retenue d'un arbre logé au moins partiellement dans un fourreau qui sont relativement mobiles en translation et en rotation selon un axe commun longitudinal selon l'invention avant d'en exposer le fonctionnement.

Comme on peut l'observer en se reportant aux diverses figures du dessin, un dispositif de retenue d'un arbre logé au moins partiellement dans un fourreau qui sont relativement mobiles en translation et en rotation selon un axe commun longitudinal qui est conforme à l'invention, comprend, essentiellement, entre autres un arbre 10, un fourreau 20, une came 30, une contre-came 40, un organe élastique 50, des moyens de maintien 60 et, éventuellement un élément 70 qui permet de rendre notamment ces moyens de maintien 60 imperdables.

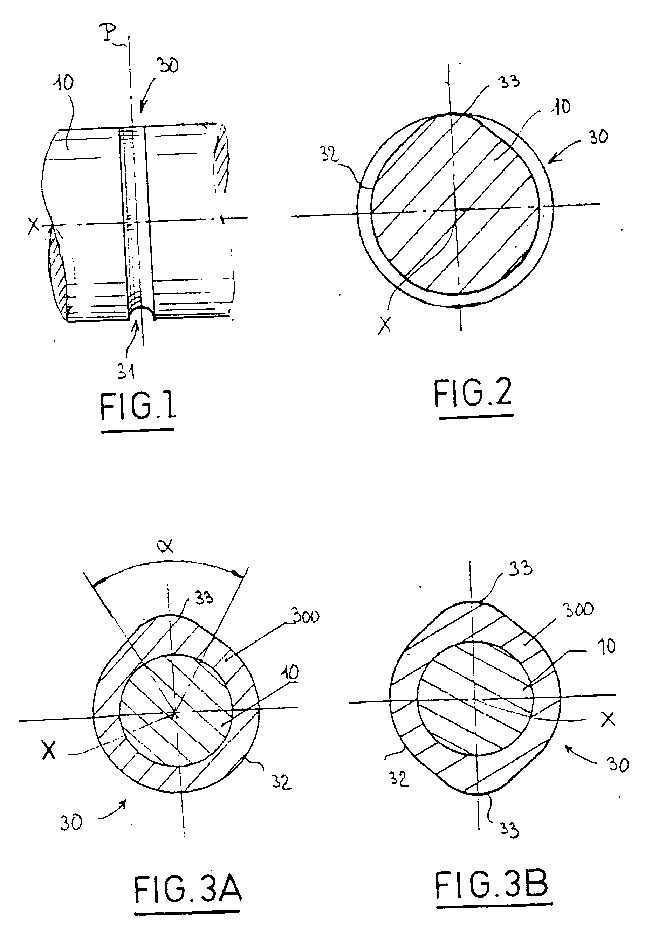

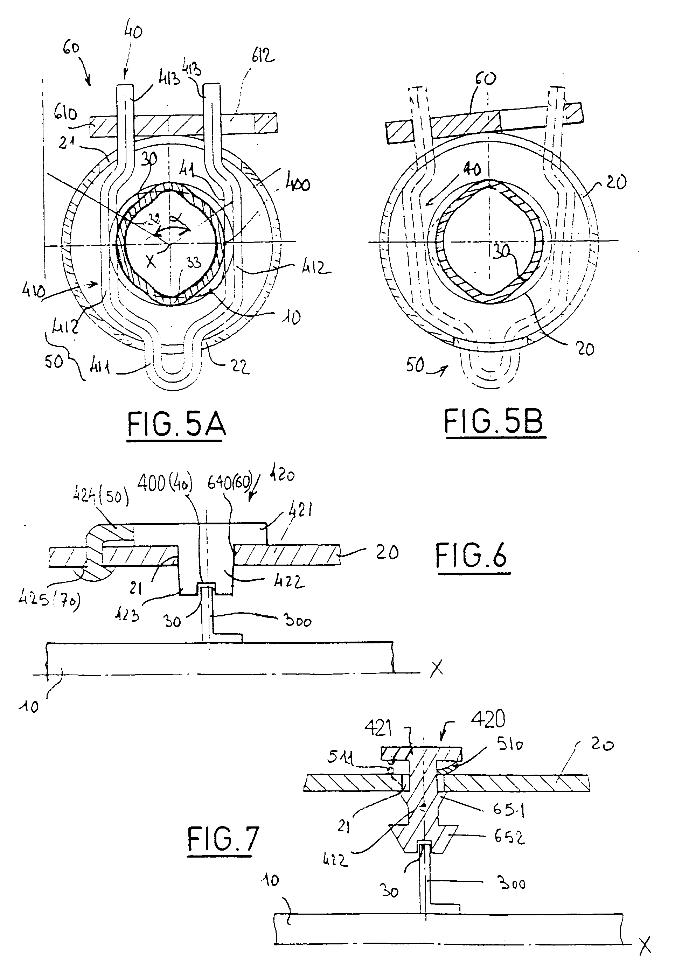

L'arbre 10, par exemple métallique creux (Figures 5A, 5B) ou plein (Figures 1, 2, 3A, 3B), en un ou plusieurs tronçons réunis par exemple par des joints de cardan, est logé au moins partiellement dans le fourreau 20 où il est porté par des paliers, non représentés, de tous types convenables. Cet arbre et ce fourreau présentent un axe X commun longitudinal selon lequel ils sont normalement relativement mobiles et en translation et en rotation.

Le fourreau 20, fait par exemple d'un tube métallique est transpercé localement d'un orifice 21 et éventuellement d'un ajour 22 sur lesquels on reviendra par la suite.

La came 30 présente un profil 31, soit en gorge, c'est-à-dire femelle (Figures 1, 2, 5), soit en bourrelet c'est-à-dire mâle (Figures 6, 7) à section droite courbe (Figure 1) ou polygonale (Figures 6, 7). Cette came peut être, soit en retrait par rapport à la péripherie de l'arbre, comme illustré sur les Figures 1 et 2 ainsi que sur les Figures 5A et 5B, soit au contaire être en saillie, comme illustré sur les Figures 6 et 7. On comprend donc que suivant que le profil 31 est en dépression ou en protubérance, il joue le rôle d'un élément femelle ou male respectivement. Comme on peut l'observer, la came 30 se présente à la manière d'un cercle 32 ou analogue avec au moins un lobe 33 (Figures 2, 3A) et de préférence deux lobes diamétralement opposés (Figures 3B et 5A, 5B). Cette came est disposée dans un plan P perpendiculaire à l'axe X et occupant une position fixe tant en rotation qu'en translation par rapport à l'arbre 10. La came 30 est ménagée directement sur l'arbre comme illustré sur les Figures 1, 2, 5A et 5B ou bien formée sur une bague 300 qui est rapportée sur l'arbre 10 et calée sur ce dernier tant en rotation qu'en translation selon toute technique classique appropriée telle que clavetage, soudage, rainurage ou emmanchement à force. Une came 30 rapportée est illustrée sur les Figures 3A, 3B, 6 et 7.

La contre-came 40, destinée à être placée dans le plan P et à s'y mouvoir radialement au moins localement, est munie d'un palpeur 400 destiné à coopérer directement avec la came 30. Cette contre-came présente un profil 41 en forme de barre c'est-à-dire mâle ou de rainure c'est-à-dire femelle adapté au profil 31 de manière à constituer un élément mâle ou femelle complémentaire selon la nature du profil 31.

Comme on le voit pour le mode de réalisation des Figures 5A et 5B, la contre-came 40 se présente à la manière d'un étrier 410 ou similaire avec un plancher 411 contre-coudé qui relie des branches 412 munies de pattes 413 terminales. L'une au moins de ces branches 412 sert localement de palpeur 400. Cet étrier est par exemple fait en corde à piano.

Pour le mode de réalisation illustré sur les Figures 6 et 7, la contre-came 40 se présente à la manière d'un "pion" 420 ou similaire qui définit une tête 421, un corps 422 et un embout 423. Comme on peut l'observer sur la Figure 6, la tête 421 se prolonge par une languette 424 terminée par une fixation 425. Pour la variante d'exécution de ce mode de réalisation illustré sur la Figure 7, on voit qu'une rondelle Belleville 510 (partie gauche) ou un ressort à boudin 511 (partie droite) est inséré entre la tête 421 et le fourreau 20 de manière à solliciter la contre-came vers l'extérieur. La partie libre de l'embout 423, dirigée vers l'axe X sert localement de palpeur 400.

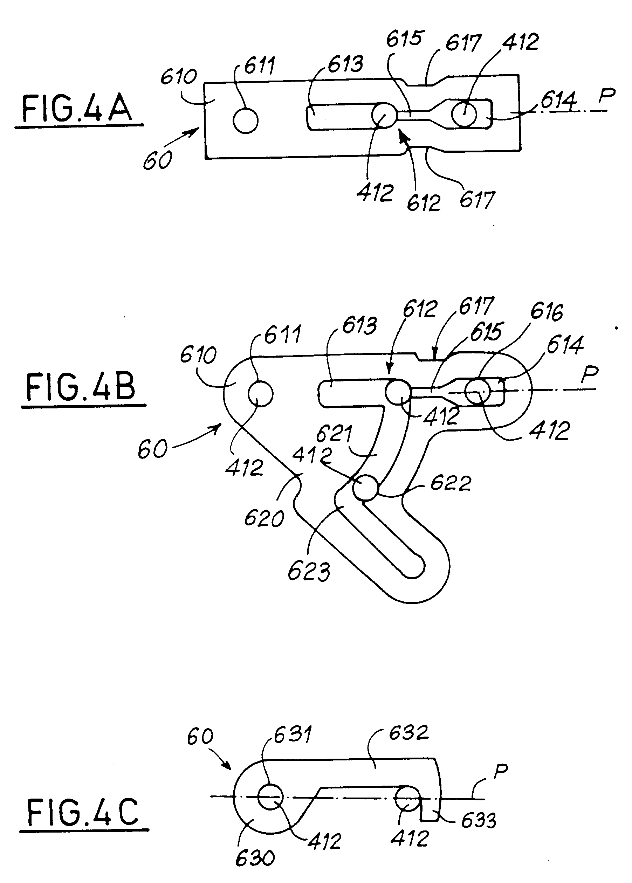

Les moyens de maintien 60 sont illustrés sur les Figures 4A, 4B et 4C pour diverses variantes d'un mode de réalisation. Ces moyens de maintien 60 comprennent une plaquette 610 transpercée d'un trou 611 et d'une fente 612 composée d'une boutonnière 613 et d'une lumière 614 réunies par un sillon étroit 615. Pour les variantes d'exécution des Figures 4A et 4B, la lumière 614 est munie d'un biseau en direction du sillon 615 et est creusé d'au moins un dégagement 617 à l'aplomb du sillon. Ceci est clairement illustré. Pour la variante d'exécution de la Figure 4B, la plaquette 610 est munie d'un appendice 620 qui est transpercé d'un couloir 621 courbe, pratiquement centré sur le trou 611. Un appui 622 est ménagé dans le couloir comme illustré. Ce couloir se prolonge par un passage 623 qui, comme on peut l'observer, est radial et centrifuge par rapport au trou 611. Comme on peut le voir, le couloir 621 débouche dans la boutonnière 613 et le passage 623 débouche dans le couloir 621. Pour la variante d'exécution de la Figure 4C, les moyens de maintien 60 se présentent sous la forme d'une plaquette 630 percée d'un trou 631 et munie un bras 632 terminé par un bec 633.

Pour la variante de la Figure 6 du mode de réalisation illustré des moyens de maintien, le corps 422 a de préférence une configuration fuyante ou conique 640, de manière à s'amincir, à présenter une certaine "dépouille" en quelque sorte dans un sens centripète. Pour la variante d'exécution de la Figure 7 de ce mode de réalisation des moyens de maintien, le corps 422 est muni d'une butée 651 frangible ou escamotable ainsi que d'un arrêtoir 652. On reviendra sur ceci par la suite. La butée 651 est proche de la tête 421 et l'arrêtoir est proche de l'embout 423.

Les moyens de maintien 60 sont par exemple faits en une matière synthétique moulée.

L'organe élastique 50 change de nature suivant les modes de réalisation et les variantes d'exécution. Pour le mode de réalisation des Figures 5A et 5B, l'étrier 410 est fait en corde à piano c'est-à-dire en un fil métallique élastique et ce sont de préférence le plancher 410 et au moins l'une des branches 412 qui jouent le rôle d'organe élastique comme on le comprendra par la suite. Pour le mode de réalisation de la Figure 6, on voit que la languette 424 joue le rôle d'organe élastique alors que pour la variante d'exécution de la Figure 7, la rondelle Belleville 510, comme illustré sur la partie supérieure droite, ou bien le ressort à boudin 511 comme illustré sur la partie supérieure gauche, joue le rôle d'organe élastique.

Un élément 70 est, de préférence, associé aux moyens de maintien 60 afin de les rendre imperdables. C'est ce qui est illustré par exemple sur la Figure 6 où cet élément est formé par la fixation 425 qui, dans ce mode de réalisation, se présente à la manière d'un rivet. Il est clair que cet élément peut être constitué par exemple d'un téton expansible ou bien résulter d'un matage ou d'un rabat fait sur la patte 413 engagée dans le trou 611. Cet élément peut être monobloc, d'un seul tenant avec les moyens de maintien ou bien rapporté.

Quel que soit le mode de réalisation et la variante d'exécution de celui-ci, les moyens de maintien 60 sont toujours destinés à coopérer avec l'organe élastique 50. Ces moyens de maintien coopèrent avec l'organe élastique de manière à le retenir dans un premier état bandé d'équilibre métastable où la came et la contre-came sont au contact et leurs profils engagés au moins partiellement afin que l'arbre et le fourreau, d'une part, soient immobilisés en translation et, d'autre part, soient mobiles en rotation selon un arc α déterminé inférieur à 360° et qui peut, dans certains cas, être nul. Ces moyens de maintien coopèrent avec l'organe élastique de manière à le placer dans un deuxième état peu bandé d'équilibre relativement stable où la came et la contre-came sont séparées et leurs profils dégagés au moins partiellement afin que l'arbre et le fourreau soient totalement libres tant en rotation qu'en translation. Le passage du premier au deuxième état de l'organe élastique résulte d'un contact de la came et de la contre-came lorsque l'organe élastique est dans son premier état et qu'on imprime une rotation relative de l'arbre et du fourreau qui est supérieure à l'arc α indiqué.

On se reportera maintenant aux Figures 5A et 5B où le mode de réalisation illustré est équipé de moyens de maintien conformes à la Figure 4A. L'ensemble des constituants du dispositif selon l'invention sont réunis et montés comme dessiné. Comme on peut l'observer, l'orifice 21 qui transperce le fourreau 20 a une configuration longiligne de manière à permettre l'insertion de l'étrier 410 d'une manière telle que les pattes 413 terminales puissent s'y mouvoir relativement librement dans le plan P perpendiculaire à l'axe X. Le plancher contre- coudé 411 de l'étrier est engagé dans l'ajour 22 de configuration oblongue. Une fois l'étrier mis en place, il se trouve normalement, de par son élasticité inhérente, dans un état peu bande où ses branches 412 sont relativement éloignées l'une de l'autre, position qui permet l'insertion de l'arbre 10. Ceci est illustré sur la Figure 5B. On voit que l'une des pattes 413 est engagée dans le trou 611 et que l'autre de ces pattes réside dans la lumière 614. Si maintenant, l'étrier est placé dans la situation où il est illustré sur la Figure 5A pour laquelle ses branches 412 sont relativement proches, parallèles, on voit que l'une au moins de celles-ci s'engagent alors dans la came 30. Dans la situation illustrée sur la Figure 5A, l'une des pattes 413 de l'étrier est engagée dans le trou 611 de la plaquette 610 alors que l'autre des pattes, comme cela résulte de l'examen de la Figure 4A, réside dans la boutonnière 613 et repose dans cette dernière à l'entrée du sillon 615. Dans ce mode de réalisation, le palpeur 400 de la contre-came 40 est constitué par la partie de la branche ou des branches 412 qui sont en appui contre le cercle 32 de la came 30. Dans ce cas, la came 30 est dans une gorge en retrait par rapport à la périphérie de l'arbre 10. Lorsque le dispositif est dans la situation illustrée sur la Figure 5A, on voit que l'organe élastique est dans un état bandé et que du fait de la pénétration des branches de la contre-came dans la gorge de la came, l'arbre et le fourreau sont immobilisés en translation et ne peuvent pas coulisser selon l'axe X. De même, on voit que tant que le ou les lobes 33 de la came ne rencontrent pas le palpeur de contre-came, l'arbre et le fourreau peuvent tourner relativement l'un à l'autre selon l'arc α déterminé qui est inférieur à 360°. Si l'on fait tourner relativement l'un à l'autre arbre et fourreau et qu'une fois que l'un des lobes est au contact du palpeur de came, on imprime un couple qui tend à s'opposer à l'effort de l'organe élastique et qu'on surmonte et vainc cet effort, on repousse les branches pour les forcer à s'écarter. En examinant la Figure 4A, on voit alors que la patte 413 qui est dans la boutonnière 613 est repoussée dans le sillon 615 en direction de la lumière 614. La nature du matériau dont est faite la plaquette et les dimensions du sillon, de la patte, et du ou des dégagements 617 éventuellement ménagés, permettent de régler l'effort qu'il est nécessaire d'appliquer pour faire échapper l'une des pattes de la boutonnière et la repousser dans le sillon vers la lumière. On voit donc qu'en fin de fonctionnement, le dispositif selon l'invention se retrouve dans la position où il est illustré sur la Figure 5B.

On comprend que la présence du biseau 616 ménagé dans la lumière 614 à proximité du sillon 615 permet d'"armer" ou de "réarmer" l'organe élastique 50 pour le faire passer de la position où il est illustré sur la Figure 5B correspondant au deuxième état à celle où il est illustré sur la Figure 5A correspondant au premier état. Ceci permet à volonté la neutralisation ou le réarmement du dispositif selon l'invention.

On se reportera maintenant à la variante de la Figure 4B de ce mode de réalisation pour le cas où la plaquette 610 est munie d'un appendice 620; il est possible de faire tourner cette plaquette dans son plan autour de la patte 413 qui est engagée dams le trou 611. Cette variante convient particulièrement bien au cas où une colonne de direction est préassemblée en un lieu qui est différent de celui où cette dernière est effectivement installée sur un véhicule. Afin de permettre l'engagement de l'arbre dans son fourreau lors du préassemblage de la colonne, la plaquette est placée de manière que l'une des pattes 413 soit dans le passage 623 et repose dans ce dernier contre l'extrémité de celui-ci qui est opposée au trou 611 où est engagée l'autre patte 413. On comprend donc alors que l'étrier se trouve dans la situation illustrée sur la Figure 5B où l'organe élastique est dans son deuxième état. Cette opération terminée, on rapproche les pattes et branches de l'étrier à l'aide de toute technique appropriée de manière que la patte du passage vienne dans le couloir et repose dans l'appui 622. L'organe élastique est dans son premier état et l'étrier se trouve dans la situation illustrée sur la Figure 5A. Arbre et fourreau sont alors immobilisés relativement l'un à l'autre, totalement en translation et partiellement en rotation. Dans cette situation, il est impossible que l'organe élastique de l'étrier se détende spontanément en cas de chocs ou de trépidations qui ne manquent pas de survenir par exemple lors de transfert. Au moment de l'opération du montage de la colonne de direction préassemblée sur un véhicule, il suffit de faire basculer la plaquette dans son plan pour que la patte mobile de l'étrier occupe une position analogue à celle qui est illustrée sur la Figure 4A, situation où il y a toujours une immobilisation relative de l'arbre et du fourreau, immobilisation qu'il est possible de neutraliser afin de rendre totalement libres, et en translation et en rotation, fourreau et arbre en délogeant la patte mobile le la boutonnière pour la faire passer dans la lumière après franchissement du sillon, comme indiqué précédemment.

Dans la variante de la Figure 4C, les moyens de maintien 60 se présentent à la manière d'un crochet ou analogue. L'armement de l'organe élastique se fait en rapprochant les pattes et branches de l'étrier et en maintenant la patte mobile derrière le bec 633 alors que l'autre patte est engagée dans le trou 631. Le passage du premier état bandé au deuxième état peu bandé résulte alors soit d'une déformation du bras 632 et/ou du bec 633 ou bien d'un basculement de la plaquette 630 qui tourne autour de la patte engagée dans le trou 631. Ceci est fonction du choix de la nature des matériaux et des dimensions des constituants du dispositif selon l'invention.

On se reportera maintenant au mode de réalisation dont deux variantes sont illustrées sur les Figures 6 et 7. Comme on peut immédiatement l'observer dans ce mode de réalisation, la came 30 est en saillie sur l'arbre 10 et a une profil 31 mâle en bourrelet alors que la contre-came 40 se présente sous forme d'un profil 41 femelle en rainure. Dans ce mole de réalisation, les moyens de maintien 60 se présentent sous la forme d'un "pion" ou similaire.

Dans la variante d'exécution de la Figure 6, l'orifice 21 du fourreau est par exemple un alésage à section droite de préférence circulaire dans une direction et par exemple conique, allant se resserant en direction de l'axe X dans une direction perpendiculaire. Le corps 422 du pion a une géométrie 640 complémentaire par exemple en cône et est engagé à force dans l'orifice 21. La situation illustrée sur la Figure 6 correspond au premier état bandé de l'organe élastique 50 dont le rôle est jouée par la languette 424. On comprend que si l'on fait tourner relativement l'un à l'autre fourreau et arbre, de préférence l'arbre, le lobe de la came va venir rencontrer le palpeur de la contre-came dont il est normalement distant et exercer une poussée centrifuge qui aura tendance à déloger le corps 422 du pion 420 de l'orifice. Dès que cette tendance est amorcée, la languette 424 qui sert d'organe élastique 50 prend son deuxième état et se détend en entraînant de préférence le pion totalement hors du fourreau et réuni à celui-ci par la fixation 425 qui sert d'élément 70 pour le rendre imperdable.

Dans la variante d'exécution illustrée sur la Figure 7, le pion 420 est engagé dans l'orifice 21 de préférence à section non circulaire de manière à maintenir l'orientation relative des came et contre-came. Le corps 422 est muni d'une butée 651 et d'un arrêtoir 652. La butée et l'arrêtoir sont d'une nature telle qu'elle permet l'insertion par exemple à l'aide d'une poussée manuelle ou à la presse du pion dans le fourreau par l'orifice 21 comme illustré. C'est la butée 651, qui se présente par exemple sous la forme de pattes élastiques escamotables ou frangibles qui place la contre-came de manière qu'elle soit sur la trajectoire que peut décrire le lobe de la came lorsque l'arbre tourne tout en retenant l'organe élastique 50 dans son premier état bandé. L'organe élastique constitué par le ressort à boudin 511 ou la rondelle Belleville 510 tend à solliciter le pion dans le sens centrifuge. On comprend que si on fait tourner relativement l'un à l'autre arbre et fourreau, le contact du palpeur et en particulier du lobe avec la contre-came tend à repousser le pion vers l'extérieur en faisant céder la butée 651. L'organe élastique en prenant son deuxième état peu bandé du fait de sa détente achève alors de déplacer vers l'extérieur le pion qui se trouve alors cependant retenu par l'arrêtoir 652 qui joue le rôle d'élément 70 rendant les moyens de maintien, ici le pion, imperdables.

Dans le mode de réalisation illustré sur les Figures 5A et 5B, on comprend que l'élément 70 qui rend les moyens de maintien 60 imperdables peut être constitué par le matage de la patte 413 terminale qui est engagée dans le trou 611 de la plaquette ou bien par un pliage de cette patte. Dans ce mode de réalisation, on a utilisé un étrier en corde à piano fait d'un fil d'acier de section circulaire. Il est clair qu'on peut aussi utiliser un profilé à section en U dans le cas où la came, rapportée ou non, est en saillie sur l'arbre comme illustré sur les Figures 6 et 7. La fabrication de la came 30 peut se faire selon toute technique classique courante avec enlèvement de matière ou non.

On comprend tout l'intérêt du dispositif selon l'invention, qui est au besoin réarmable, et qui permet dans un état d'immobiliser au moins temporairement en translation et partiellement en rotation un fourreau et un arbre mobiles relativement l'un à l'autre en translation et en rotation selon un axe commun et dans un autre état de totalement les libérer. On conçoit que ce dispositif trouve une application particulièrement judicieuse dans l'industrie automobile tout spécialement pour les colonnes de direction.

## Revendications

1. Dispositif de retenue d'un arbre (10) logé au moins partiellement dans un fourreau (20), l'arbre et le fourreau étant relativement mobiles en translation et en rotation selon un axe (X) commun longitudinal, dispositif caractérisé en ce qu'il comprend :
- une came (30) qui est portée par l'arbre (10), qui est située à sa périphérie et qui est solidaire en translation et en rotation de celui-ci;
- une contre-came (40) avec un palpeur (400) qui est destinée à coopérer avec cette came (30) et qui est portée par le fourreau (20) et qui est située au moins partiellement à l'intérieur du fourreau (20) dans un plan (P) fixe perpendiculaire à l'axe (X) et qui est montée mobile dans ce plan pratiquement radialement, ces came (30) et contre-came (40) présentant des profils (31, 41) propres male et femelle complémentaires destinés à s'engager l'un dans l'autre;
- un organe élastique (.50) qui agit sur cette contre-came (40) et qui tend à normalement séparer la contre-came (40) de la came (30);
- des moyens de maintien (60) qui sont destinés à coopérer avec cet organe élastique (50) pour le placer dans un premier état bandé d'équilibre métastable où came (30) et contre-came (40) sont au contact et leurs profils (31, 41) engagés au moins partiellement afin que arbre (10) et fourreau (20), d'une part, soient immobilisés en translation et, d'autre part, soient mobiles en rotation selon un arc (α) déterminé inférieur à 360°, et dans un deuxième état peu bandé d'équilibre relativement stable où came (30) et contre-came (40) sont séparées et leurs profils dégagés au moins partiellement afin que arbre (10) et fourreau (20) soient totalement libres en translation et en rotation, le passage du premier au deuxième état résultant d'un contact came (30) contre-came (40) à la suite d'une rotation supérieure à cet arc alors que l'organe élastique est dans son premier état.

2. Dispositif selon la revendication 1, caractérisé en ce que la came (30) a la configuration d'un cercle (32) avec au moins un lobe (33) saillant par rapport à ce cercle (32).

3. Dispositif selon la revendication 1 ou 2, caractérisé en ce que la came (30) est en retrait par rapport à l'arbre (10).

4. Dispositif selon la revendication 1 ou 2, caractérisé en ce que la came (30) est en saillie par rapport à l'arbre (10).

5. Dispositif selon l'une quelconque des revendications 1 à 4, caractérisé en ce que la came (30) est placée sur une bague (300) rapportée et calée sur l'arbre (10).

6. Dispositif selon l'une quelconque des revendications 1 à 5, caractérisé en ce que la contre-came (40) a la configuration d'un étrier (410) ouvert fait d'un plancher (411) reliant deux branches (412) dont l'une au moins sert de palpeur (400) et dont au moins le plancher (411) sert d'organe élastique (50).

7. Dispositif selon la revendication 6, caractérisé en ce que les moyens de maintien (60) ont la configuration d'une plaquette (610) transpercée d'un trou (611) destiné à recevoir l'une de ces branches (412) et transpercée d'une fente (612) qui est faite d'une boutonnière (613) et d'une lumière (614) réunies par un sillon (615) et qui est destinée à recevoir l'autre de ces branches (412) pour qu'elle puisse s'y mouvoir pour passer de l'une à l'autre de ces boutonnière (613) et lumière (614) et y rester en franchissant momentanément ce sillon (615).

8. Dispositif selon la revendication 7, caractérisé en ce que la plaquette (610) est munie d'une appendice (620) qui est transpercé d'un couloir (621) courbe centré sur le trou (611) et débouchant dans la boutonnière (613) et qui est transpercé d'un passage (623) radial et centrifuge par rapport à ce trou (611) et débouchant dans ce couloir (621).

9. Dispositif selon la revendication 6, caractérisé en ce que les moyens de maintien (60) ont la configuration d'une plaquette (630) qui est transpercée d'un trou (631) destiné à recevoir l'une de ces branches (412) et qui présente un bras (632) avec un bec (633) destiné à coopérer avec l'autre de ces branches (412).

10. Dispositif selon l'une quelconque des revendications 1 à 5, caractérisé en ce que la contre-came (40) à la configuration d'un pion (420) qui présente une tête (421), un corps (422) et un embout (423) et qui est agencé de manière que cet embout (623) serve de palpeur (400) et cette tête (421) soit associée à l'organe élastique (50).

11. Dispositif selon la revendication 10, caractérisé en ce que l'organe élastique (50) est un ressort (510, 511) interposé entre tête (421) et fourreau (20).

12. Dispositif selon la revendication 10, caractérisé en ce que l'organe élastique (50) est une languette (424) réunie à la tête (421) et au fourreau (20).

13. Dispositif selon l'une quelconque des revendications 10 à 12, caractérisé en ce que le fourreau (20) est transpercé d'un orifice (21) est en ce que le corps (422) du pion (420) est engagé dans cet orifice (21) de manière que la tête (421) soit à l'extérieur du fourreau (20) et l'embout (423) à l'intérieur.

14. Dispositif selon la revendication 13, caractérisé en ce que le corps (422) est engagé serré dans l'orifice (21), cet engagement serré servant de moyens de maintien (60).

15. Dispositif selon la revendication 13, caractérisé en ce que les moyens de maintien (60) sont constitués d'une butée (651) portée par la corps (422) et placée proche de la tête (421) et d'un arrêtoir (652) porté par le corps (422) et placé proche de l'embout (423).

16. Application du dispositif selon l'une quelconque des revendications 1 à 15 à une colonne de direction d'automobile dont font partie ces arbre (10) et fourreau (20).

## Patentansprüche

1. Haltevorrichtung für eine Welle (10), die wenigstens teilweise in einer Hülse (20) eingebaut ist, wobei die Welle und die Hülse bezüglich einer gemeinsamen Längsachse (X) in Translations- und Rotationsrichtung verhältnismäßig beweglich sind, wobei die Vorrichtung dadurch gekennzeichnet ist, daß sie umfaßt:
- eine Nocke (30), die von der Welle (10) getragen wird, die auf ihrem Umfang angeordnet ist, und die in Translations- und Rotationsrichtung zu dieser feststehend ausgebildet ist;
- eine Gegennocke (40) mit einem Fühler (400), die dazu bestimmt ist, mit der Nocke (30) zusammenzuarbeiten, die von der Hülse (20) getragen wird, die wenigstens teilweise im Inneren der Hülse (20) in einer festen Ebene (P) senkrecht zur Achse (X) angeordnet ist und die in dieser Ebene praktisch radial beweglich angeordnet ist, wobei die Nocke (30) und Gegennocke (40) geeignete komplementäre männliche und weibliche Profile (31, 41) aufweisen, die dazu bestimmt sind, ineinander einzugreifen;
- ein elastisches Element (50), das auf diese Gegennocke (40) einwirkt und das dazu tendiert, normalerweise die Gegennocke (40) von der Nocke (30) zu trennen;
- eine Halteeinrichtung (60), die dazu bestimmt ist, mit diesem elastischen Element (50) zusammenzuarbeiten, um es in einen ersten, gespannten, metastabilen Gleichgewichtszustand, in dem die Nocke (30) und die Gegennocke (40) in Kontakt sind und ihre Profile (31, 41) wenigstens teilweise ineinandergreifen, damit die Welle (10) und die Hülse (20) einerseits in Translationsrichtung unbeweglich und andererseits in Rotationsrichtung um einen Winkel (a), der kleiner als 360° festgesetzt ist, beweglich sind, und in einen zweiten, etwas gespannten, verhältnismäßig stabilen Gleichgewichtszustand zu bringen, in dem die Nocke (30) und die Gegennocke (40) getrennt und ihre Profile wenigstens teilweise frei sind, damit die Welle (10) und die Hülse (20) in Translations- und Rotationsrichtung total frei sind, wobei der Übergang von dem ersten zu dem zweiten Zustand von einem Kontakt Nocke (30)-Gegennocke (40) nach einer Drehung größer als dieser Winkel herrührt, während das elastische Element in seinem ersten Zustand ist.

2. Vorrichtung nach Anspruch 1, dadurch gekennzeichnet, daß die Nocke (30) die Form eines Kreises (32) mit wenigstens einem in bezug auf diesen Kreis (32) vorspringenden Zipfel (33) aufweist.

3. Vorrichtung nach Anspruch 1 oder 2, dadurch gekennzeichnet, daß die Nocke (30) in bezug auf die Welle (10) vertieft ausgebildet ist.

4. Vorrichtung nach Anspruch 1 oder 2, dadurch gekennzeichnet, daß die Nocke (30) in bezug auf die Welle (10) vorstehend ausgebildet ist.

5. Vorrichtung nach einem der Ansprüche 1 bis 4, dadurch gekennzeichnet, daß die Nocke (30) auf einem auf der Welle (10) aufgesetzten und festen Ring (300) ausgebildet ist.

6. Vorrichtung nach einem der Ansprüche 1 bis 5, dadurch gekennzeichnet, daß die Gegennocke (40) die Form eines offenen Bügels (410) hat, der aus einer Platte (411) hergestellt ist, die zwei Schenkel (412) verbindet, von denen einer wenigstens als Fühler (400) dient, und von denen wenigstens die Platte (411) als elastisches Element (50) dient.

7. Vorrichtung nach Anspruch 6, dadurch gekennzeichnet, daß die Halteeinrichtung (60) die Form eines Plättchens (610) hat, durch das ein Loch (611) hindurchgeht, das dazu bestimmt ist, den einen der Schenkel (412) aufzunehmen, und durch das ein Schlitz (612) hindurchgeht, der aus einer länglichen Aussparung (613) und einem Schlitzloch (614) besteht, die durch eine Rille (615) verbunden sind, und der dazu bestimmt ist, den anderen der Schenkel (412) aufzunehmen, damit er sich darin bewegen kann, um von dem einen zum anderen der länglichen Aussparung (613) und des Schlitzloches (614) überzugehen und beim Übergang zeitweise in dieser Rille (615) zu bleiben.

8. Vorrichtung nach Anspruch 7, dadurch gekennzeichnet, daß das Plättchen (610) mit einem Ansatz (620) ausgerüstet ist, durch den ein auf dem Loch (611) zentrierter und in die längliche Aussparung (613) einmündender gekrümmter Durchgang (621) hindurchgeht und durch den ein radialer und in bezug auf dieses Loch (611) zentrifugaler und in diesen Durchgang (621) einmündender Durchgang (623) hindurchgeht.

9. Vorrichtung nach Anspruch 6, dadurch gekennzeichnet, daß die Halteeinrichtung (60) die Form eines Plättchens (630) hat, durch das ein Loch (631), das dazu bestimmt ist, den einen dieser Schenkel (412) aufzunehmen, hindurchgeht, und das einen Arm (632) mit einer Nase (633) aufweist, die dazu bestimmt ist, mit dem anderen dieser Schenkel (412) zusammenzuarbeiten.

10. Vorrichtung nach einem der Ansprüche 1 bis 5, dadurch gekennzeichnet, daß die Gegennocke (40) die Form eines Metallstücks (420) hat, das einen Kopf (421), einen Körper (422) und ein Ansatzstück (423) aufweist und das so angeordnet ist, daß dieses Ansatzstück (423) als Fühler (400) dient und dieser Kopf (421) mit dem elastischen Element (50) verbunden ist.

11. Vorrichtung nach Anspruch 10, dadurch gekennzeichnet, daß das elastische Element (50) eine zwischen dem Kopf (421) und der Hülse (20) zwischengesetzte Feder (510, 511) ist.

12. Vorrichtung nach Anspruch 10, dadurch gekennzeichnet, daß das elastische Element (50) eine mit dem Kopf (421) und der Hülse (20) verbundene Zunge (424) ist.

13. Vorrichtung nach einem der Ansprüche 10 bis 12, dadurch gekennzeichnet, daß durch die Hülse eine Öffnung (21) hindurchgeht und daß der Körper (422) des Metallstücks (420) so in diese Öffnung (21) eingefügt ist, daß der Kopf (421) außerhalb der Hülse (20) und das Ansatzstück (423) innerhalb ist.

14. Vorrichtung nach Anspruch 13, dadurch gekennzeichnet, daß der Körper (422) fest in der Öffnung (21) eingespannt ist, wobei dieser feste Eingriff als Halteeinrichtung (60) dient.

15. Vorrichtung nach Anspruch 13, dadurch gekennzeichnet, daß die Halteeinrichtung (60) aus einem von dem Körper (422) getragenen und nahe des Kopfes (421) angeordneten Anschlag (651) und einem von dem Körper (422) getragenen und nahe dem Ansatzstück (423) angeordneten Stopper (625) besteht.

16. Verwendung der Vorrichtung nach einem der Ansprüche 1 bis 15 für eine Autolenksäule, von der die Welle (10) und die Hülse (20) einen Bestandteil bilden.

## Claims

1. A device for retaining a shaft (10) housed at least partially in a sleeve (20), the shaft and the sleeve being capable of relative translational and rotational motion with respect to a common longitudinal axis (X), device characterized in that it comprises :
- a cam (30) which is carried by the shaft (10), is situated at its periphery and is integral with it in terms of translational and rotational motion;
- a cam follower (40) with a feeler (400), which cam follower is intended to cooperate with this cam (30), is carried by the sleeve (20) and is situated at least partially inside the sleeve (20) in a fixed plane (P) perpendicular to the axis (X), and which is mounted so as to be able to move in this plane virtually radially, this cam (30) and this cam follower (40) having respective specific complementary male and female profiles (31,41) which are intended to engage in each other;
- a resilient member (50) which acts on this cam follower (40) and which tends normally to separate the cam follower (40) from the cam (30);
- securing means (60) which are intended to cooperate with this resilient member (50) in order to place it in a first tensioned state of metastable equilibrium in which the cam (30) and cam follower (40) are in contact and their profiles (31,41) are engaged at least partially so that the shaft (10) and the sleeve (20), on the one hand, are immobilized in terms of translational motion and, on the other hand, are capable of rotational motion by a specified arc (a) less than 360°, and in a second slightly tensioned state of relatively stable equilibrium in which the cam (30) and cam follower (40) are separated and their profiles are disengaged at least partially so that the shaft (10) and the sleeve (20) are completely free in terms of translational and rotational motion, the change from the first to the second state resulting from a cam (30)/cam follower (40) contact following a rotation greater than this arc whilst the resilient member is in its first state.

2. The device according to claim 1, characterized in that the cam (30) has the configuration of a circle (32) with at least one lobe (33) projecting with respect to the circle (32).

3. The device according to claim 1 or 2, characterized in that the cam (30) is set back with respect to the shaft (10).

4. The device according to claim 1 or 2, characterized in that the cam (30) projects with respect to the shaft (10).

5. The device according to any one of claims 1 to 4, characterized in that the cam (30) is placed on a collar (300) attached and immobilized on the shaft (10).

6. The device according to any one of claims 1 to 5, characterized in that the cam follower (40) has the configuration of an open clip (410) made from a base (411) connecting together two limbs (412), at least one of which serves as a feeler (400), and at least the base (411) of which serves as the resilient member (50).

7. The device according to claim 6, characterized in that the securing means (60) have the configuration of a plate (610) pierced with a hole (611) intended to receive one of these limbs (412), and pierced with a slot (612) which is made from an oblong hole (613) and from an elongated hole (614) which are joined together by a channel (615), and which is intended to receive the other one of these limbs (412) so that it can move therein in order to pass from the oblong hole (613) to the elongated hole (614), or vice versa and to remain therein by momentarily crossing this channel (615).

8. The device according to claim 7, characterized in that the plate (610) is equipped with an appendix (620) which is pierced with a curved corridor (621) centered on the hole (611) and opening into the oblong hole (613), and which is pierced with a passage (623) which is radial and centrifugal with respect to this hole (611) and opens into this corridor (621).

9. The device according to claim 6, characterized in that the securing means (60) have the configuration of a plate (630) which is pierced with a hole (631) intended to receive one of these limbs (412) and which has an arm (632) with a nose (633) intended to cooperate with the other of these limbs (412).

10. The device according to any one of claims 1 to 5, characterized in that the cam follower (40) has the configuration of a stud (420) which has a head (421), a body (422) and a socket (423), and which is arranged in such a way that this socket (423) serves as a feeler (400) and this head (421) is associated with the resilient member (50).

11. The device according to claim 10, characterized in that the resilient member (50) is a spring (510, 511) located between the head (421) and the sleeve (20).

12. The device according to claim 10, characterized in that the resilient member (50) is a tongue (424) joined to the head (421) and to the sleeve (20).

13. The device according to any one of claims 10 to 12, characterized in that the sleeve (20) is pierced with an orifice (21), and in that the body (422) of the stud (420) is engaged in this orifice (21) in such a way that the head (421) is outside the sleeve (20), and the socket (423) inside it.

14. The device according to claim 13, characterized in that the body (422) is engaged tightly in the orifice (21), this tight engagement serving as the securing means (60).

15. The device according to claim 13, characterized in that the securing means (60) consist of an abutment (651) carried by the body (422) and placed close to the head (421), and of a stop device (652) carried by the body (422) and placed close to the socket (423).

16. Application of the device according to any one of claims 1 to 15 to a motor vehicle steering column of which this shaft (10) and this sleeve (20) are belonging to.
